# EUROPEAN PATENT APPLICATION

(11) **EP 4 687 035 A1**
(43) Date of publication of application: **04.02.2026**
(21) Application number: 25193459.2
(22) Date of filing: 01.08.2025
(51) Int. Cl.: G06F 9/50

(54) **ARTIFICIAL INTELLIGENCE MODEL PREFILL AND DECODE OVERLAP WITH HETEROGENEOUS PROCESSING CORES**

(30) Priority: 02.08.2024 US 202463678851 P; 14.08.2024 US 202418804275
(71) Applicant: Google LLC, Mountain View, CA 94043 (US)
(72) Inventor: Nagarajan, Rahul, San Jose, California, 95130 (US); Lingamneni, Avinash, Mountain View, California, 94043 (US)
(74) Representative: Betten & Resch

(57) **Abstract**

Methods, systems, and apparatus, including computer-readable storage media and computer program products for heterogeneous processing core allocation and mapping for accelerating artificial intelligence (AI) workload with prefill and decode operations. A fleet of processing devices can include separate processing cores for accelerating prefill and decode operations of an AI workload, respectively. Individual devices are assigned for one or both of prefill or decode operation execution and include core-level schedulers for balancing shared hardware resources, such as high-bandwidth memory, chip-interconnect bandwidth, and power, to increase utilization of resources for performing the assigned operations. The same device may be mapped to a logical allocation to a performing prefill operations, decode operations, or both prefill and decode operations on a workload-by-workload basis, using a scheduler that accounts for both the arithmetic intensity of pre-fill operations and the auto-regressive nature of decode operations for some AI workloads, such as executing large language models (LLMs).

## Description

### CROSS-REFERENCE TO RELATED APPLICATIONS

This application claims the benefit of the filing date of U.S. Patent Application No. 63/678,851, for ARTIFICIAL INTELLIGENCE MODEL PREFILL AND DECODE OVERLAP WITH HETEROGENEOUS PROCESSING CORES, which was filed on August 2, 2024, and of U.S. Patent Application No. 18/804,275, which was filed on August 14, 2024, and which are incorporated here by reference.

### BACKGROUND

Large language model (LLM) serving involves two distinct phases: prefill and decode. The prefill phase includes generating embeddings, vectors, or other representations of each input token of an LLM. The prefill phase can include computing keys, values, or other intermediate data for generating an output token. After computing the keys, values, and outputs for each token, the decode phase can be to autoregressively generate new output tokens from the output token of the prefill phase. Decode operations benefit from increasing the batch size of queries processed. However, increasing the batch size significantly increases the compute needs in the prefill phase, making the phase take longer. There is a thus a trade-off between serving latency and serving efficiency based on the batch size.

### BRIEF SUMMARY

Aspects of the disclosure are directed to heterogeneous processing core allocation and mapping for accelerating artificial intelligence (AI) workloads with prefill and decode operations. A fleet of processing devices can include separate processing cores for accelerating prefill and decode operations of an AI workload, respectively. Individual devices are assigned for one or both of prefill or decode operation execution and include core-level schedulers for balancing shared hardware resources, such as high-bandwidth memory, chip-interconnect bandwidth, and power, to increase utilization of resources for performing the assigned operations. The same device may be mapped to a logical allocation for performing prefill operations, decode operations, or both prefill and decode operations on a workload-by-workload basis using a scheduler that accounts for an arithmetic intensity of prefill operations and an autoregressive nature of decode operations.

Aspects of the disclosure provide for increasing execution of workloads exhibiting operations with different degrees of arithmetic intensity, mapping logically allocated processing cores to physical processing cores on a per-workload basis. Other implementations of these aspects include corresponding methods, computer systems, apparatuses and devices, computer-readable storage media and computer program products recorded on one or more computer storage devices, each configured to perform the actions of the methods.

### BRIEF DESCRIPTION OF THE DRAWINGS

FIG. 1 is a block diagram of an example workload processing system, according to aspects of the disclosure.
FIG. 2A is a chart illustrating an example resource utilization on a device with homogeneous cores.
FIG. 2B is a chart illustrating an example resource utilization on a device with heterogeneous processing cores, according to aspects of the disclosure.
FIG. 2C is a chart illustrating another example of resource utilization on a device with heterogeneous processing cores, according to aspects of the disclosure.
FIG. 3A is a block diagram of a first example logical allocation and mapping, according to aspects of the disclosure.
FIG. 3B is a block diagram of a second example logical allocation and mapping, according to aspects of the disclosure.
FIG. 3C is a block diagram of a third example logical allocation and mapping, according to aspects of the disclosure.
FIG. 4 is a block diagram of an example processing device with heterogeneous cores, according to aspects of the disclosure.
FIG. 5 is a flow diagram of an example process for executing prefill and decode operations on one or more devices with heterogeneous cores, according to aspects of the disclosure.
FIG. 6 is a block diagram illustrating one or more models, such as for deployment in a datacenter housing a hardware accelerator with heterogeneous cores, on which the deployed models will execute, according to aspects of the disclosure.
FIG. 7 is a block diagram of an example computing environment for implementing a workload processing system, according to aspects of the disclosure.

### DETAILED DESCRIPTION

### Overview

Aspects of the disclosure are directed to heterogeneous processing core allocation and mapping for accelerating artificial intelligence (AI) workloads with prefill and decode operations. A workload processing system can include one or more processing devices, each processing including separate processing cores for accelerating prefill and decode operations of an AI workload, respectively. Individual devices are assigned for one or both of prefill or decode operation execution and include core-level schedulers for balancing shared hardware resources, such as high-bandwidth memory, chip-interconnect bandwidth, and power, to increase utilization of resources for performing the assigned operations.

An AI workload can be a set of operations for processing input through a trained AI model, or for training an AI model. For example, an AI workload can be a trained large language model (LLM) receiving input, such as text, code, a natural language prompt, image, audio, and/or video. The workload processing system processes the tokens to generate intermediate data or representations, such as embeddings, for example using a transformer with a multi-headed or multi-query attention mechanism. The output of the prefill phase is a new output token. The workload processing system processes the new output token to generate additional tokens, autoregressively, e.g., using the previously generated token to generate a new token. Each token is represented by an embedding, vector, or other internal representation generated by the workload processing system during the prefill phase.

The ratio of time spent on the decode and prefill varies for each query. The execution time is a function of at least two factors: input sequence length and output token length. Input sequence length or context length determines the prefill time. Output token length or number of output tokens determines the decode time. The combination of these factors makes arriving at a serving setup that efficiently uses available resources for LLMs a complicated task. The workload processing system generates a logical allocation of prefill and decode processing cores to efficiently process a target AI workload given at least the input sequence length and output token length. The system generates, from the logical allocation, a mapping to physical processing cores of devices in the system. Core-level schedulers balance shared computational resources on each device, so that neither power nor memory bandwidth is underutilized.

The heterogeneous cores can share various computational resources on the host device, which the host device can allocate to different cores depending on their logical allocation for a given workload. For example, the heterogeneous cores can share the memory capacity and memory bandwidth. In addition, or alternatively, the heterogeneous cores can share inter-chip interconnect bandwidth. As another example, the heterogeneous cores can be on separate voltage domains, meaning that the cores can operate at different power states and performance levels to allocate how available power is used by the host device.

Aspects of the disclosure provide for the amortization of the cost of provisioned resources across the cores, at incremental cost of adding the heterogeneous core to an existing single-type core design of a host device. The amortized cost can be lower than provisioning for an entire system dedicated to performing prefill or decode operations. The same device may be mapped to a logical allocation to a performing prefill operations, decode operations, or both prefill and decode operations on a workload-by-workload basis, using a scheduler that accounts for both the arithmetic intensity of prefill operations and the autoregressive nature of decode operations for some AI workloads. Arithmetic intensity is defined as a ratio of total floating-point operations and the amount of data accessed for performing various types of operations. Prefill operations generally have a higher arithmetic intensity than decode operations, reflecting the nature of prefill operations as requiring less data movement for performing prefill per number of operations performed versus decode operations, requiring more data movement per number of operations performed.

Disaggregating prefill and decode operations at the core-level allows for a core-level scheduler to balance shared computational resources. By contrast, a device with homogeneous processing cores running either prefill or decode operations at a time will not be fully utilizing the provisioned resources on a processing device. Prefill operations underutilize both memory bandwidth and provisioned power on the chip, while decode operations underutilize power.

Separating prefill and decode operations by processing core enables more flexible resource contention on a pre-device basis. By contrast, implementing devices for accelerating only prefill or only decode operations has less flexibility in executing different workloads with different profiles for serving latency (which increases with batch size) and serving efficiency. Efficiency may be measured in queries per second (QPS). An internal core-level scheduler for each device can allocate shared resources to either a prefill processing core or a decode processing core, depending on what logically allocated cores are mapped to a host device for the scheduler and cores. The heterogeneous processing cores can operate in parallel, further reducing overall execution time. For a sequence of queries or batches of queries, the decode processing cores can process a query batch n - 1 while the prefill processing cores can process a query batch n.

Aspects of the disclosure provide for heterogeneous cores that provide for separately executing higher and lower arithmetically intense operations for more efficient utilization of the device resources, such as by allowing for running prefill and decode operations in parallel on the chip or processing device. At least one of the cores can further include a matrix compute unit, which can be part of a decode engine. The decode engine can include a systolic array for accelerating decode operations that are autoregressive in nature. The same core implementing the decode engine can also be used in accelerating other types of workloads, such as accelerating matrix multiplication of matrices exhibiting coarse or fine-grained sparsity. The provisioned compute resources allow this core to handle the arithmetic intensity needed for LLM decode operations, while higher arithmetically intense operations, such as an LLM prefill phase, are performed on another processing core.

As further examples, one of the heterogeneous cores can be configured for performing high arithmetic intensity operations, e.g., greater than 500, while the other core or cores can be configured for lower intensity operations, e.g., between 8-100 or lower. These lower intensity operations may instead be more memory demanding than the higher arithmetic intensity operations.

The logical allocation of prefill and decode processing cores allows for catering to workloads of various different arithmetic intensity. Besides just decode and prefill operations, example operations from relative lower to higher arithmetic intensity include large embedding processing operations, decode attention operations, processing heterogeneous mixture-of-experts (MoE), processing decode feedforward layers, performing adaptive compute operations, processing prefill attention layers, and processing prefill feedforward layers. These and other types of operations of varying degrees of arithmetic intensity can make up a workload to the processing system, and aspects of the disclosure allow for different logical allocations of the heterogeneous cores to improve workload execution efficiency.

### Example Systems

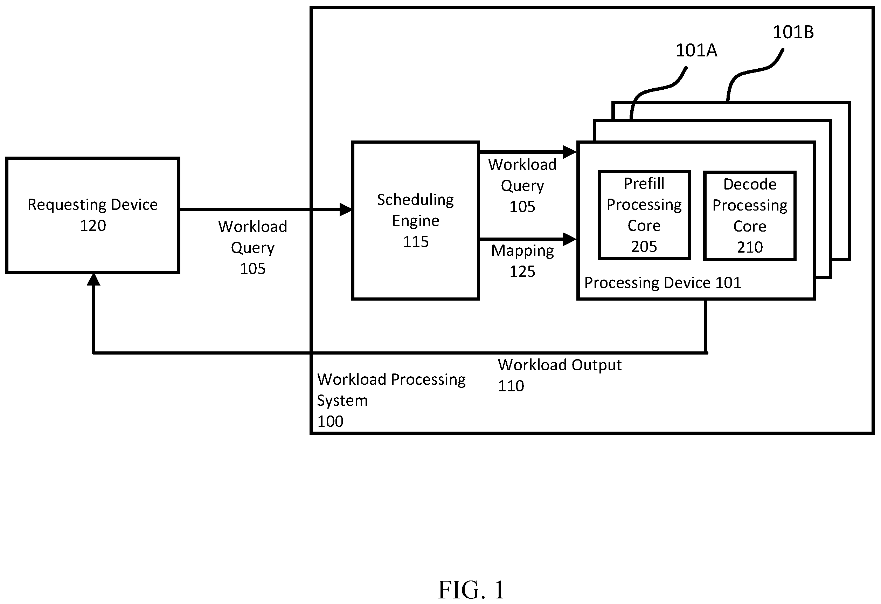

FIG. 1 is a block diagram of an example workload processing system 100, according to aspects of the disclosure. The system 100 includes processing device 101. While processing devices 101A and 101B are shown, in various examples the system 100 can include any number of processing devices.

The system 100 can receive workload queries or requests, such as workload query 105, for executing a workload associated with the received queries or requests. For example, the workload query 105 can be a prompt to a large language model, and the workload executed can be to process the prompt through the large language model. Workload output 110 can represent the output of executing a workload with a given query or request. Workload output 110 can be generated by the system 100 using output from a large language model used to process a prompt.

The workload query 105 can be received from requesting device 120. Requesting device 120 can be any type of device configured to communicate data to and from the system 100. Examples of the requesting device 120 include a user device, such as a laptop, personal computer, smartphone or other mobile device, wearable device, video game console, and so on. Other examples of the requesting device 120 include servers, "headless" devices communicating with the system 100 but without implementing any form of user interface, and specialized devices, such as sensors, microcontrollers, or IoT devices.

Workload output 110 can be sent from the system 100 to the requesting device 120, for example in response to the system receiving the workload query 105. The requesting device 120 can output the workload output 110, for example as a response in a chat-bot application in which the workload query 105 is inputted as a prompt to the chat-bot. In other examples, the requesting device 120 performs additional processing on the workload output 110, and/or sends the workload output 110 to one or more other devices for further processing or outputting.

The system 100 can implement a scheduling engine 115 configured to receive the workload query 105. In some examples, the system implements other components (not shown) that can be configured to receive input to the system 100, such as the workload query 105. These components may also be configured to send the workload query 105 to the scheduling engine 115, or otherwise communicate with the engine 115 for scheduling the processing of the workload query 105.

The scheduling engine 115 determines a logical allocation of processing cores for executing the workload query 105. The particular allocation depends on the workload needed to execute the workload query 105. For example, different workloads may require processing the query 105 through various types of AI models, with different profiles of operations of varying arithmetic intensity. In determining the logical allocation, the scheduling engine 115 can receive AI workload data including one or more characteristics of the AI workload and one or more workload execution objectives and determine the logical allocation in accordance with AI workload data and the one or more workload execution objectives. For example, the workload query 105 may be associated with a service-level objective or other maximum tolerated threshold for latency, between the requesting device 120 sending the workload query 105, and the requesting device 120 receiving workload output 110. Other factors, such as the size of the workload query 105 and/or the length of the workload output 110, also affects the execution time of executing the workload query 105.

The scheduling engine 115 can identify an allocation of prefill and decode processing cores for handling a decode batch size on the decode processing cores, such that the decode/prefill latency ratio is covered under the service-level objective or maximum tolerated threshold for latency. For example, if enough prefill processing cores are allocated such that the decode processing cores are not idle from waiting for an output token during the prefill phase, and the maximum tolerated threshold for latency is met, the scheduling engine 115 does not need to scale for higher batch size.

The scheduling engine 115 determines a mapping 125 of logically allocated processing cores to the processing cores of the processing devices 101, e.g., 101A and 101B. Devices are not statically assigned to either prefill or decode operations, but rather may perform either prefill, decode, or both prefill and decode operations, based on the mapping 125.

The scheduling engine 115 can determine core-level scheduling for mapped devices, e.g., for managing how shared resources such as shared high bandwidth memory, chip interconnect bandwidth, and power distribution among different processing cores of the mapped devices. The resource scheduling can also be based on the above workload objectives, e.g., for improving queries per second under latency requirements or other service-level objectives. In some examples, core-level scheduling is at least partially or entirely handled by a core-level scheduler on the processing device, which can be configured to allocate shared computational resources according to the same objectives.

Processing devices 101 receive the workload query 105 and the mapping 125 and execute respective portions of the workload in accordance with the query 105. Besides logically allocating and mapping processing devices, the scheduling engine 115 can also implement various types of data, model, and/or pipeline parallelism, for assigning operations to be executed by each of the processing devices 101.

As a pre-processing step, the workload processing system 100 can break down the workload query 105 into tokens, patches, or other segments depending on whether the workload query 105 includes text, video, audio, and so on. The prefill and decode operations of a workload can correspond to generating embeddings, vectors, or other representations of each input token. The prefill phase can include computing keys, values, or other intermediate data for generating the first output token. For example, the workload can be a transformer with attention mechanisms including one or more heads, in which matrices for each head are processed with input embeddings to generate keys, values, and outputs for each token and each head of attention.

After computing the keys, values, and outputs for each token, the decode phase of executing the workload can be to autoregressively generate new output tokens from the first output token of the prefill phase. Memory transfer, e.g., moving weights, keys, values, and outputs throttle the decode phase, but increasing the batch size increases the compute demands of the prefill phase.

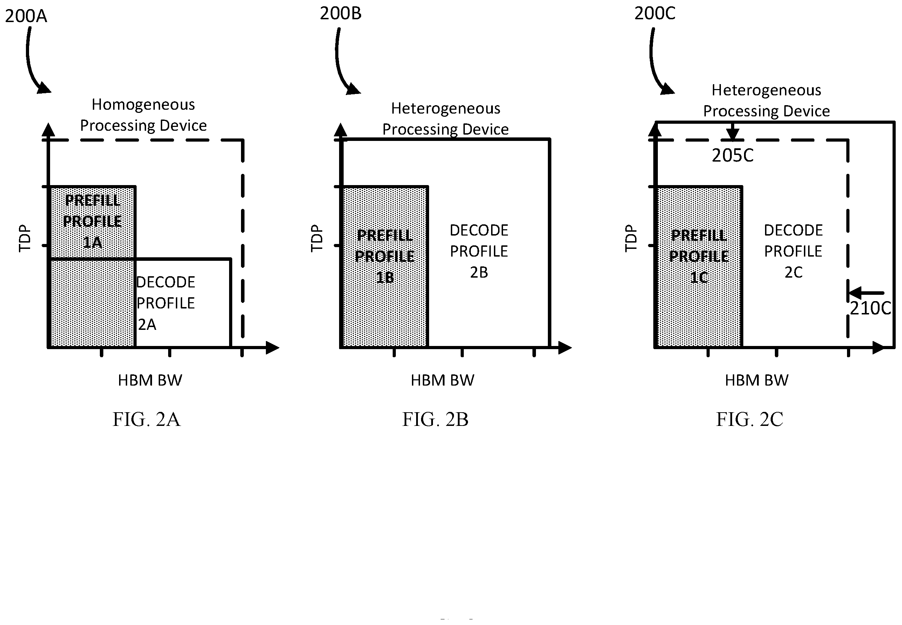

FIGs. 2A-2C are charts illustrating resource utilization on devices with homogeneous and heterogeneous cores. Charts 200A, 200B, and 200C show high bandwidth memory bandwidth along the x-axis (HBM BW). The charts 200A-200C also show thermal design power along the y-axis, (TDP). The dotted lines on charts 200A and 200C indicate the maximum HBM BW and TDP output for respective processing devices represented by the charts 200A-200C. Profiles 1A, 2A, 2B, 1C, and 2C indicate the relative power and bandwidth usage of each profile, based on the area covered by each profile on the charts 200A-200C.

FIG. 2A is a chart 200A illustrating an example resource utilization on a device with homogeneous processing cores. In chart 200A, the profiles 1A and 2A are overlapping, indicating that only one type of operation, either prefill or decode, is performed. As can be seen from the chart 200A, higher TDP allows for higher prefill operation execution, but does not improve the HBM bandwidth that allows for improved execution of decode operations.

FIG. 2B is a chart 200B illustrating an example resource utilization on a device with heterogeneous cores, according to aspects of the disclosure. Disaggregating prefill and decode operations at the core level allows for core-level schedulers to allocate shared computational resources between prefill and decode processing cores of a processing device. On a heterogeneous processing device, power and bandwidth can be allocated to each core to increase overall utilization, as shown by the prefill profile 1B and the decode profile 2B covering the entire chart 200B. The heterogeneous cores setup reduces the total cost of the serving system, as more resources overall are leveraged per device, while not reducing the queries per second (QPS) that can be achieved at a given latency per%query3%As shown by chart 200B, both the prefill processing core and the decode processing core executing operations corresponding to the prefill profile 1B and decode profile 2B can be provisioned with shared resources, to improve execution of both types of operations.

FIG. 2C is a chart 200C illustrating another example resource utilization on a device with heterogeneous cores, according to aspects of the disclosure. In some examples, resource utilization may need to be adjusted when the profiles exceed the computational resources, e.g., power and bandwidth, available on the processing device. Techniques such as bandwidth proportioning and dynamic voltage and frequency scaling (DVFS) can be used to adjust power usage excess 205C and excessive bandwidth usage 210C.

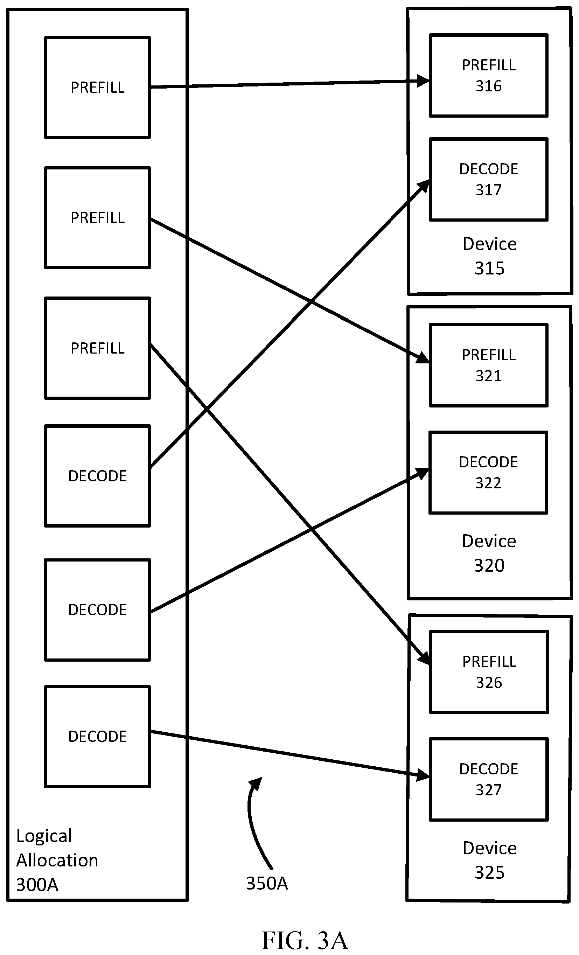

FIGs. 3A-3C are block diagrams of example logical allocations and mappings generated by the scheduling engine 115, according to aspects of the disclosure. FIG. 3A is a block diagram of a first example logical allocation 300A and mapping 350A, according to aspects of the disclosure. The scheduling engine 115 generates a logical allocation 300A of six cores, three for performing prefill operations and three for performing decode operations for a target workload. Mapping 350A is represented by arrows from the logical allocation 300A to the devices 315, 320, 325. Each device in FIGs. 2A-2C includes a respective prefill processing cores 316, 321, and 326, and a respective decode processing core 317, 322, and 327. The mapping 350A maps each core from the logical allocation 300A to a respective physical processing core in the devices 315, 320, and 325.

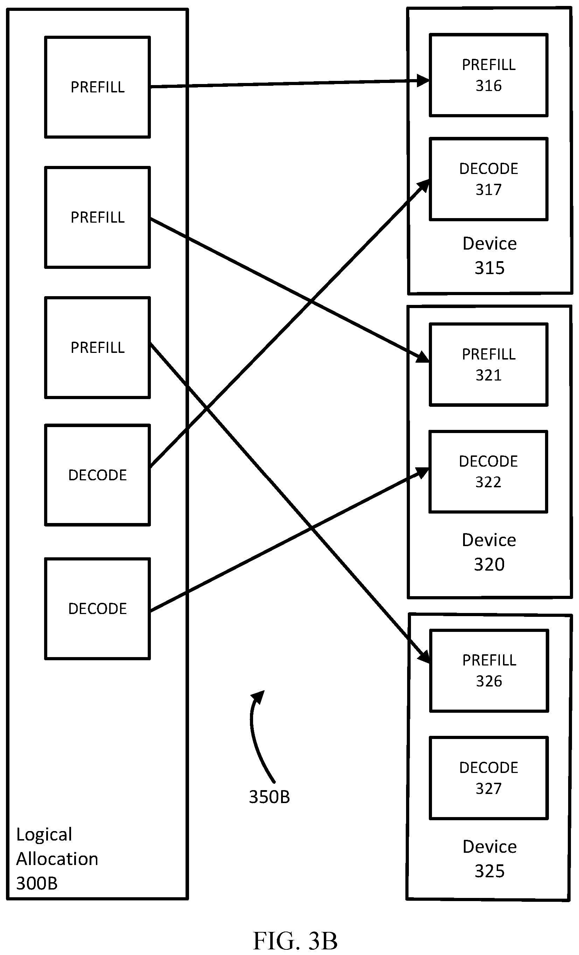

FIG. 3B is a block diagram of a second example logical allocation 300B and mapping 350B, according to aspects of the disclosure. For the target workload in this example, the scheduling engine 115 generates a logical allocation 300B for three prefill processing cores and two decode processing cores for mapping to the devices 315, 320, and 325. As an example, if the target workload specifies a larger context size, e.g., number of tokens, the logical allocation 300A can specify more prefill processing cores versus workloads specifying smaller context sizes. For example, in a summarization task, in which the target workload includes text or multiple documents for summarization by a machine learning model, the context size may be larger than for other example tasks.

As another example, more decode cores may be allocated than prefill cores. As an example, if the target workload specifies a larger output size, e.g., larger amount of generated tokens, then more decode processing cores may be required over workloads requiring smaller output sizes, e.g., smaller code snippets for source code generation.

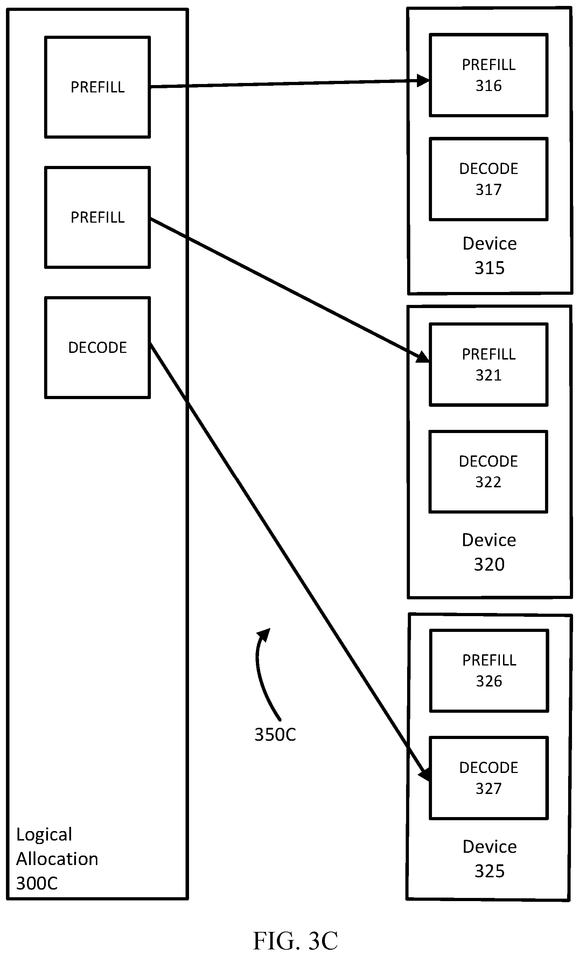

FIG. 3C is a block diagram of a third example logical allocation 300C and mapping 350C, according to aspects of the disclosure. For the target workload in this example, the scheduling engine 115 generates a logical allocation 300C for two prefill processing cores and one decode processing core. Prefill processing core 316 of device 315, prefill processing core 321 of device 320, and decode processing core 327 of device 325 are assigned according to mapping 350C.

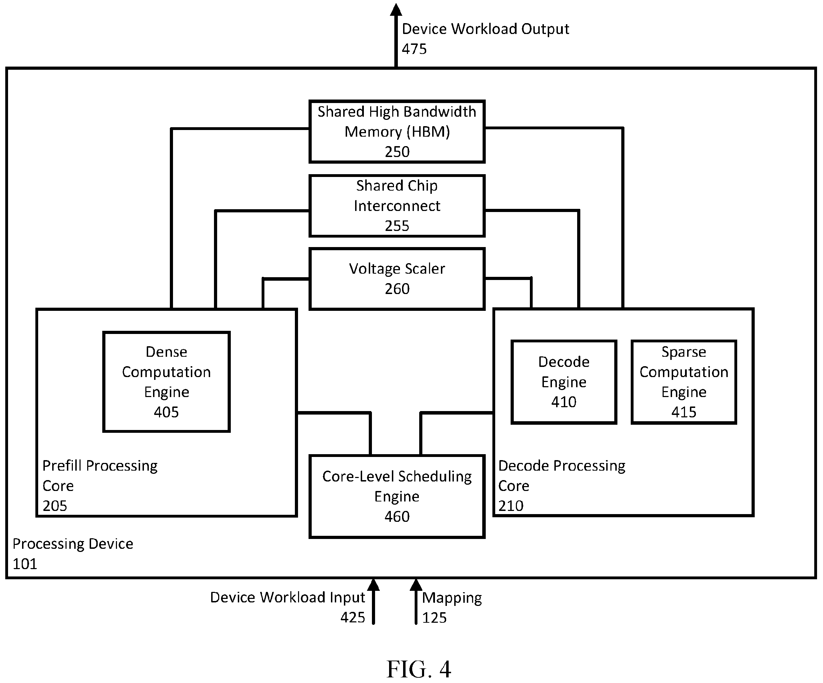

FIG. 4 is a block diagram of the processing device 101 implementing the prefill processing core 205 and the decode processing core 210, according to aspects of the disclosure. The processing device 101 can also include shared high-bandwidth memory (HBM) 250, shared chip interconnect 255, and voltage scaler 260.

The processing device 101 can receive device workload input 425 and mapping 125. The mapping 125 can specify which of the cores 205, 210 have been mapped in accordance with the logical allocation generated by the scheduling engine 115. The device workload input 425 can be part of or based on the workload query 105. Depending on other features of device scheduling implemented by the scheduling engine 115, various types of parallelism may be implemented, and only portions of the overall input is received by the processing device 101 as the device workload input 425. Similarly, device workload output 475 can be input or part of the overall workload output 110, combined or further processed by a downstream device.

The prefill and decode processing cores 205, 210 can include one or more processing tiles including processing units that can be connected to a series of data processing lanes. The streamed data can be retrieved from shared HBM 250, which can be any of a variety of different memory devices, including main memory, cache, or be coupled to persistent storage, such as solid state or hard disk storage. Data can be streamed between the processing cores 205, 210, the HBM 250, and/or another source of data connected to or a part of the processing device 101 connected through the shared chip interconnect 255.

The HBM 250 can be any type of high-bandwidth memory, accessible to both the prefill processing core 205 and the decode processing core 210. The shared chip interconnect 255 can be any type of interconnect for linking modules or components of devices together, e.g., PCIe. The voltage scaler 260 is configured to scale voltage between the prefill processing core 205 and the decode processing core 210, for adjusting how much power each core receives. The cores 205, 210 can be on separate voltage domains.

The processing device can include a core-level scheduling engine 460. The engine 460 can manage various shared computational resources, e.g., power, shared chip interconnect, and/or shared HBM bandwidth, to balance the execution of prefill and decode processing operations on either the prefill processing core 205 and/or the decode processing core 210. For example, the core-level scheduling engine 460 can implement techniques such as bandwidth contention and dynamic voltage and frequency scaling (DVFS) to adjust power usage excess and excessive bandwidth usage.

The prefill processing core 205 and the decode processing core 210 can be configured for acceleration of certain operations, such as matrix-matrix multiplication, matrix-vector multiplication, etc. The shared chip interconnect 255 can be a data bus or any form of interconnect according to any of a variety of communication standards, for example PCIe. The decode processing core 210 can include a decode engine 410 and a sparse computation engine 415. These operations include sorting or summing sparse vectors, operations for summarizing the contents of input vectors, and operations for translating sparse matrices from one sparse matrix storage format to another. The sparse computation engine 415 allows for generalized support of processing sparse data, while still allowing a decode engine 410 to be implemented for executing the decode phase of a large language model or another AI workload.

The decode engine 410 can implement one or more matrix multiply units, which may further implement systolic arrays or other structures for accelerating sparse matrix multiplication. The decode engine 410 can be configured for accelerating operations with lower arithmetic intensity relative to the dense computation engine 405, e.g., by implementing the decode engine 410 with a smaller physical area on the processing device 101. The dense computation engine 405 can be configured for higher performance, e.g., more floating-point operations per second and more power consumption relative to the decode engine 410.

The decode engine 410 and the dense computation engine 405 can implement different quantities or types of processing tiles or other subdivisions or processing circuits, for example as part of respective systolic processing arrays. The different quantities or types can correspond to the type of operation performed by each engine, e.g., operations with higher arithmetic intensity by the dense computation engine 405 and/or operations with lower arithmetic intensity by the decode engine 410. The systolic processing arrays can be part of respective matrix computation units implemented by the engines 405, 410, for example to accelerate different types of matrix operations, such as matrix multiplication.

Although the processing cores can be separately configured for performing higher or lower intensity operations, the core-level scheduling engine 460 can schedule lower arithmetic intensity operations on the dense computation engine 405, and vice versa for higher arithmetic intensity operations and the decode engine 410. For example, if a processing device is not scheduled to perform decode operations, the decode engine 410 can be scheduled to perform prefill operations in addition to operations scheduled on the dense computation engine 405. The core-level scheduling engine 460 can allocate more bandwidth on average to the decode engine 410 relative to the dense computation engine 405, or more power to the dense computation engine 405 than the decode engine 410, as further examples. The exact allocation of shared resources can vary from workload to workload.

The prefill processing core 205 can include a dense computation engine 405, for accelerating dense or non-sparse operations, such as matrix-vector multiplication, matrix-matrix multiplication and so on. The various engines 460, 410, and 415 can include matrix-multiply units implementing systolic arrays for accelerating various operations, and also apply any technique for accelerating dense or sparse multiplication, as appropriate. Combining the decode engine 410 and the sparse computation engine 415 allows for acceleration of decode and sparse-input operations, without dedicating separate components on the processing device 101.

An example input to the processing device 101 is a tensor representing input data and/or model parameters of a machine learning model to be executed using the prefill processing core 205 and the decode processing core 210. A tensor is a data structure generalizing various other common data structure types of differing dimensions. A tensor can include zero or more elements, which can be of one or more different data types, such as integers, floating-point values, Boolean values, etc. Within each data type, a data type can be parameterized according to a certain level of precision, for example an 8-bit, 16-bit, or 32-bit integer or floating-point value. The dimension of a tensor is referred to as its "rank." A tensor of rank zero is a single element, also called a scalar. A tensor of rank one is also called a vector. A tensor of rank two is also called a matrix. Vectors and matrices can also be referred to as having different ranks. For example, a vector of rank two is equivalent to a matrix. A tensor of a non-zero rank can be described as a collection of tensors one rank lower. For example, a vector of rank one is a collection of scalar values, and a matrix of rank two is a collection of vectors of rank one.

The processing device 101 may at least partially implement a processing pipeline for executing a large language model or other type of neural network. The pipeline may include generating embeddings for input training examples. An embedding can represent features of an input training example using less data, allowing for more efficient processing. Feature tensors for different input training examples will have different degrees of sparsity, which affect the amount of computational work required to generate a corresponding embedding. The hardware circuit can be configured to receive a tensor of feature values representing a training input example and generate an embedding as a tensor having a lower rank than the feature tensor.

The prefill processing core 205 and the decode processing core 210 can be any type of hardware circuit, for example one or more central processing units (CPU), field programmable gate arrays (FPGAs), or application-specific integrated circuits (ASICs). The processing device can be, for example, a graphics processing unit (GPU) or a tensor processing unit (TPU). The processing device 101 can be implemented on separate structures, e.g., a server rack including multiple interconnected processing devices.

### Example Methods

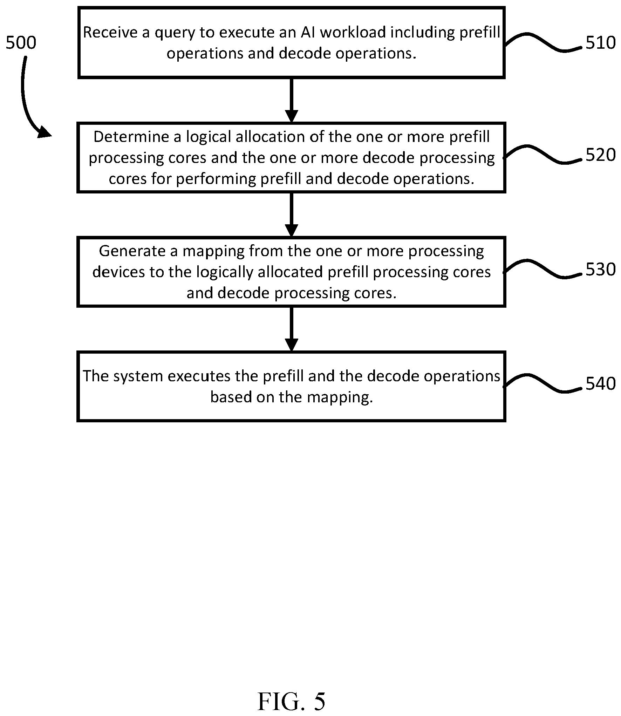

FIG. 5 is a flow diagram of an example process 500 for executing prefill and decode operations on one or more devices with heterogeneous cores, according to aspects of the disclosure. The example process can be performed on a system of one or more processors in one or more locations, such as the workload processing system 100 of FIG. 1. The following operations do not have to be performed in the precise order described below. Rather, various operations can be handled in a different order or simultaneously, and operations may be added or omitted.

The system receives a query to execute an AI workload including prefill operations and decode operations, according to block 510. The system includes the one or more processing devices, including a plurality of physical processing cores. The plurality of physical processing cores includes one or more prefill processing cores configured to accelerate prefill operations and one or more decode processing cores configured to accelerate decode operations.

The system determines, based on the query, a logical allocation of the one or more prefill processing cores for performing the prefill operations of the AI workload and of the one or more decode processing cores for performing the decode operations of the AI workload, according to block 520.

For example, the logical allocation can include an even number of prefill and decode processing cores, or different numbers of prefill and decode processing cores, based on the workload. The workload can specify, for example, different query input lengths, output lengths, and workload execution objectives, such as different SLOs or maximum tolerated latency thresholds. The workload can also vary in architecture from example-to-example, requiring different combinations of prefill and decode processing cores to be allocated to execute the workload on the query while maintaining maximum tolerated latency thresholds. Other workload objectives include one or more of a target number of inputs per second, a threshold total cost of ownership for the one or more processing devices, a service-level objective, or a maximum latency between receiving the workload input and providing the workload output.

In determining the logical allocation, the system can receive AI workload data, e.g., stored with other values or data for executing an AI model that is part of the workload and including one or more characteristics of the AI workload and one or more workload execution objectives. The system determines the logical allocation in accordance with AI workload data and the one or more workload execution objectives.

The system generates, based on the logical allocation, a mapping from the one or more processing devices to the logically allocated one or more prefill processing cores and the logically allocated one or more decode processing cores, according to block 530. For example, and as shown with reference to FIGs. 3A-3C, the mapping can be to different combinations of physical processing cores on different devices and can be based on improving overall utilization of shared resources for cores on each device, e.g., HBM bandwidth, power, and shared chip interconnect bandwidth. For example, the mapping can be to both prefill and decode processing cores, and/or only to prefill operations on some processing cores, while only to decode operations on other processing cores.

The system executes, based on the mapping, the prefill operations and the decode operations of the AI workload, according to block 540. In some examples, executing prefill operations and decode operations of the AI workload can include receiving a workload input, e.g., a workload query. The system performs, by at least one prefill processing core of mapped one or more one or more prefill processing cores, the prefill operations of the AI workload to generate first output data. The first output data can correspond to a first output token, which is autoregressively processed during the decode phase of an LLM workload. The system performs, by the at least one decode processing core of the mapped one or more decode processing cores, the decode operations of the AI workload to generate second output data. The second output data can include output tokens autoregressively generated directly or indirectly from the first output token. The system can then generate a workload output based on at least the first output data and the second output data.

Methods, systems, and apparatus, including computer-readable storage media and computer program products for heterogeneous processing core allocation and mapping for accelerating artificial intelligence (AI) workload with prefill and decode operations. A fleet of processing devices can include separate processing cores for accelerating prefill and decode operations of an AI workload, respectively. Individual devices are assigned for one or both of prefill or decode operation execution and include core-level schedulers for balancing shared hardware resources, such as high-bandwidth memory, chip-interconnect bandwidth, and power, to increase utilization of resources for performing the assigned operations. The same device may be mapped to a logical allocation to a performing prefill operations, decode operations, or both prefill and decode operations on a workload-by-workload basis, using a scheduler that accounts for both the arithmetic intensity of pre-fill operations and the autoregressive nature of decode operations for some AI workloads, such as executing large language models (LLMs).

Implementations of the present technology can each include, but are not limited to, the following. The features may be alone or in combination with one or more other features described herein. In some examples, the following features are included in combination:
(1) A method, including: receiving, by one or more processing devices, a query to execute an AI workload including prefill operations and decode operations, the one or more processing devices including a plurality of physical processing cores including one or more prefill processing cores configured to accelerate prefill operations and one or more decode processing cores configured to accelerate decode operations; determining, by the one or more processing devices and based on the query, a logical allocation of the one or more prefill processing cores for performing the prefill operations of the AI workload and of the one or more decode processing cores for performing the decode operations of the AI workload; generating, by the one or more processing devices and based on the logical allocation, a mapping from the one or more processing devices to the logically allocated one or more prefill processing cores and the logically allocated one or more decode processing cores; and executing, by the one or more processing devices and based on the mapping, the prefill operations and the decode operations of the AI workload.
(2) The method of (1), wherein executing prefill operations and the decode operations of the AI workload includes: receiving, by the one or more processing devices, a workload input; performing, by at least one prefill processing core of mapped one or more prefill processing cores, the prefill operations of the AI workload to generate first output data; performing, by the at least one decode processing core of the mapped one or more decode processing cores, the decode operations of the AI workload to generate second output data; and generating, by the one or more processing devices, a workload output based on at least the first output data and the second output data.
(3) The method of either one of (1) or (2), wherein: the one or more processing devices includes a first processing device including a first prefill processing core and a first decode processing core, and a second processing device including a second prefill processing core and a second decode processing core, the first processing device being mapped to both a logically allocated prefill processing core and a logically allocated decode processing core, and the second processing device being mapped to both a logically allocated prefill processing core and a logically allocated decode processing core, or one of a logically allocated prefill processing core and a logically allocated decode processing core.
(4) The method of (3), wherein: the AI workload includes executing one or more AI models; the workload input represents one or more input tokens; generating the first output data includes processing, by the logically allocated one or more prefill processing cores, the workload input to generate data representing a first output token; and generating the second output data includes processing, by logically allocated one or more decode processing cores, the first output data to generate one or more second output tokens.
(5) The method of either (3) or (4), wherein determining the logical allocation includes: receiving, by the one or more processing devices, AI workload data including one or more characteristics of the AI workload and one or more workload execution objectives; and determining, by the one or more processing devices, the logical allocation in accordance with AI workload data and the one or more workload execution objectives.
(6) The method of any one of (3) through (5), wherein: the one or more characteristics include one or more of a length of workload input or a length of the workload output, and the workload execution objectives include one or more of a target number of inputs per second, a threshold total cost of ownership for the one or more processing devices, a service-level objective, or a maximum latency between receiving the workload input and providing the workload output.
(7) A system, including: a plurality of physical processing cores across one or more processing devices, the plurality of physical processing cores including one or more prefill processing cores configured to accelerate prefill operations and one or more decode processing cores configured to accelerate decode operations, wherein the one or more processing devices are configured to: receive a query to execute an AI workload including prefill operations and decode operations; determine, based on the request, a logical allocation of the one or more prefill processing cores for performing the prefill operations of the AI workload and of the one or more decode processing cores for performing the decode operations of the AI workload; generate, based on the logical allocation, a mapping from the one or more processing devices to the logically allocated one or more prefill processing cores and the logically allocated one or more decode processing cores; and execute, based on the mapping, the prefill operations and the decode operations of the AI workload.
(8) The system of (7) wherein the one or more processing devices are further configured to perform the operations of the methods of any one of (1) through (6).
(9) The system of either (7) or (8), wherein, in executing prefill operations and the decode operations of the AI workload, the one or more processing devices are configured to: receive a workload input; perform, by at least one prefill processing core of the mapped one or more prefill processing cores, the prefill operations of the AI workload to generate first output data; perform, by the at least one decode processing core of the mapped one or more decode processing cores, the decode operations of the AI workload to generate second output data; and generate a workload output based on at least the first output data and the second output data.
(10) The system of any one of (7) through (8), wherein: the one or more processing devices include: a first processing device including a first prefill processing core and a first decode processing core, and a second processing device including a second prefill processing core and a second decode processing core, the first processing device being mapped to both a logically allocated prefill processing core and a logically allocated decode processing core, and the second processing device being mapped to: both a logically allocated prefill processing core and a logically allocated decode processing core, or one of a logically allocated prefill processing core and a logically allocated decode processing core.
(11) The system of (10), wherein: the second prefill processing core and the second decode processing core of the second processing device share one or both of memory bandwidth or memory capacity, and the second processing device is configured to allocate one or more of the shared memory bandwidth or the memory capacity between the second prefill processing core and the second decode processing core, based on the mapping of the second processing device.
(12) The system of (10) or (11), wherein: the second prefill processing core and the second decode processing core of the second processing device share inter-chip interconnection bandwidth with one or more other components connected to the second processing device, and the second processing device is configured to allocate the shared inter-chip interconnection bandwidth between the second prefill processing core and the second decode processing core, based on the mapping of the second processing device.
(13) The system of any one of (10) through (12), wherein: the second prefill processing core and the second decode processing core of the second processing device operate on separate voltage domains, and the second processing device is configured to allocate voltage between the second prefill processing core and the second decode processing core, based on the mapping of the second processing device.
(14) The system of any one of (9) through (13), wherein: the AI workload includes executing one or more AI models; the workload input represents one or more input tokens; in generating the first output data, the one or more processing devices are configured to process the workload input to generate data representing a first output token using the logically allocated one or more prefill processing cores; and in generating the second output data, the one or more processing devices are configured to process the first output data to generate one or more second output tokens using the logically allocated one or more decode processing cores.
(15) The system of any one of (9) through (14), wherein, in determining the logical allocation, the one or more processing devices are configured to: receive AI workload data including one or more characteristics of the AI workload and one or more workload execution objectives; and determine the logical allocation in accordance with AI workload data and the one or more workload execution objectives.
(16) The system of (15), wherein: the one or more characteristics include one or more of a length of the workload input or a length of the workload output, and the workload execution objectives include one or more of a target number of inputs per second, a threshold total cost of ownership for the one or more processing devices, a service-level objective, or a maximum latency between receiving the workload input and providing the workload output.
(17) The system of any one of (9) through (16), wherein a first decode processing core of the one or more decode processing core includes a large language model decoder engine including a systolic array of processing elements.
(18) The system of (17), wherein the first decode processing core is further configured to accelerate sparse matrix operations.
**(19)** The system of (18), wherein a first computing device includes the first decode processing core and a first prefill processing core configured to accelerate dense matrix operations.
(20) One or more computer-readable storage media storing instructions that when executed by one or more processing devices including a plurality of physical processing cores including one or more prefill processing cores configured to accelerate prefill operations and one or more decode processing cores configured to accelerate decode operations, causes the one or more processing devices to perform operations, including: receiving a query to execute an AI workload including prefill operations and decode operations; determining, based on the query, a logical allocation of the one or more prefill processing cores for performing the prefill operations of the AI workload and of the one or more decode processing cores for performing the decode operations of the AI workload; generating, based on the logical allocation, a mapping from the one or more processing devices to the logically allocated one or more prefill processing cores and the logically allocated one or more decode processing cores; and executing, based on the mapping, the prefill operations and the decode operations of the AI workload in accordance with the mapping.
(21) The one or more computer-readable storage media of (20), wherein the one or more computer-readable storage media are non-transitory.
(22) The computer-readable storage media of either (20) or (21), wherein executing the prefill operations and the decode operations of the AI workload includes: receiving, by the one or more processing devices, a workload input; performing, by at least one prefill processing core of the mapped one or more prefill processing cores, the prefill operations of the AI workload to generate first output data; performing, by at least one decode processing core of the mapped one or more decode processing cores, the decode operations of the AI workload to generate second output data; and generating, by the one or more processing devices, a workload output based on at least the first output data and the second output data.
(23) The computer-readable storage media of any one of (20) through (22), wherein the operations further include operations or steps of the method of any one of (1) through (6).
(24) The computer-readable storage media of any one of (20) through (23), wherein the plurality of physical processing cores is part of the system of any one of (7) through (19).
(25) One or more computer program products including instructions that when executed by one or more processing devices including a plurality of physical processing cores including one or more prefill processing cores configured to accelerate prefill operations and one or more decode processing cores configured to accelerate decode operations, causes the one or more processing devices to perform operations, including: receiving a query to execute an AI workload including prefill operations and decode operations; determining, based on the query, a logical allocation of the one or more prefill processing cores for performing the prefill operations of the AI workload and of the one or more decode processing cores for performing the decode operations of the AI workload; generating, based on the logical allocation, a mapping from the one or more processing devices to the logically allocated one or more prefill processing cores and the logically allocated one or more decode processing cores; and executing, based on the mapping, the prefill operations and the decode operations of the AI workload in accordance with the mapping.
(26) The computer program product of (25), wherein the operations further include the operations as in any one of (1) through (25).

### Example Computing Environment

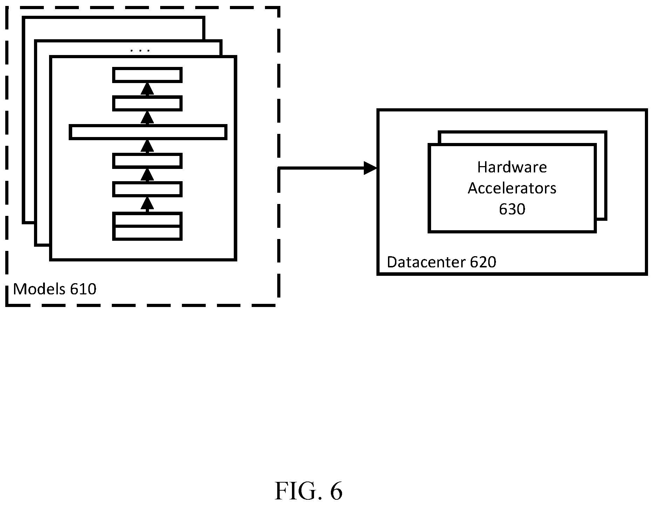

FIG. 6 is a block diagram illustrating one or more models 610, such as for deployment in a datacenter housing a hardware accelerator 630 with heterogeneous cores, on which the deployed models will execute, according to aspects of the disclosure. The hardware accelerators 630 can be any type of processor, such as a central processing unit (CPU), graphics processing unit (GPU), field-programmable gate array (FPGA), or an application-specific integrated circuit (ASIC), such as a tensor processing unit (TPU).

An architecture of a model can refer to characteristics defining the model, such as characteristics of layers for the model, how the layers process input, or how the layers interact with one another. For example, the model can be a convolutional neural network that includes a convolution layer that receives input data, followed by a pooling layer, followed by a fully connected layer that generates a result. The architecture of the model can also define types of operations performed within each layer. For example, the architecture of a convolutional neural network may define that rectified linear unit (ReLU) activation functions are used in the fully connected layer of the network. Other example architectures can include generative models, such as language models, foundation models, and/or graphical models. Other example model architectures can include transformers with multi-headed or multi-query attention mechanisms. One or more model architectures can be generated that can output results associated with accelerating prefill and decode operations, or other operations of varying degrees of arithmetic intensity.

The machine learning models can be trained according to a variety of different learning techniques. Learning techniques for training the machine learning models can include supervised learning, unsupervised learning, semi-supervised learning, and reinforcement learning techniques. For example, training data can include multiple training examples that can be received as input by a model. The training examples can be labeled with a desired output for the model when processing the labeled training examples. The label and the model output can be evaluated through a loss function to determine an error, which can be backpropagated through the model to update weights for the model. For example, a supervised learning technique can be applied to calculate an error between outputs, with a ground-truth label of a training example processed by the model.

Any of a variety of loss or error functions appropriate for the type of the task the model is being trained for can be utilized, such as cross-entropy loss for classification tasks, or mean square error for regression tasks. The gradient of the error with respect to the different weights of the candidate model on candidate hardware can be calculated, for example using a backpropagation algorithm, and the weights for the model can be updated. The model can be trained until stopping criteria are met, such as a number of iterations for training, a maximum period of time, a convergence, or when a minimum accuracy threshold is met.

The model or policy can be modified or updated until stopping criteria are met, such as a number of iterations for training, a maximum period of time, a convergence of estimated rewards or value between actions, or when a minimum value threshold is met. A model can be a composite of multiple models or components of a processing or training pipeline. In some examples, the models or components are trained separately, while in other examples, the models or components are trained end-to-end.

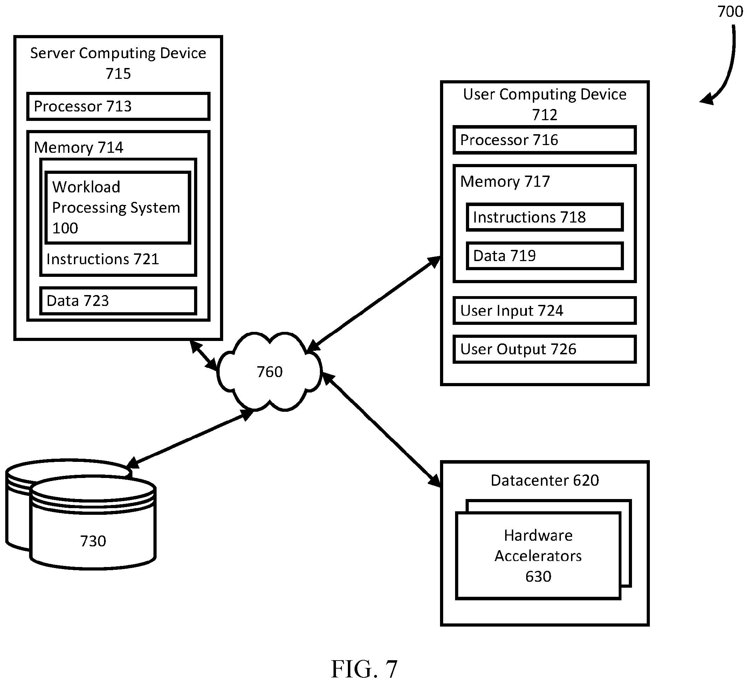

FIG. 7 is a block diagram of an example computing environment 700 for implementing the workload processing system 100. The system 100 can be implemented on one or more devices having one or more processors in one or more locations, such as in server computing device 715 and/or hardware accelerators 630. User computing device 712 and the server computing device 715 can be communicatively coupled to one or more storage devices 730 over a network 760. The storage device(s) 730 can be a combination of volatile and non-volatile memory and can be at the same or different physical locations than the computing devices 712, 715. For example, the storage device(s) 730 can include any type of non-transitory computer readable medium capable of storing information, such as a hard-drive, solid state drive, tape drive, optical storage, memory card, ROM, RAM, DVD, CD-ROM, write-capable, and read-only memories.

Aspects of the disclosure can be implemented in a computing system that includes a back-end component, e.g., as a data server, a middleware component, e.g., an application server, or a front-end component, e.g., user computing device 712 having a user interface, a web browser, or an app, or any combination thereof. The components of the system can be interconnected by any form or medium of digital data communication, such as a communication network. Examples of communication networks include a local area network (LAN) and a wide area network (WAN), e.g., the Internet. The datacenter 620 can also be in communication with the user computing device 712 and the server computing device 715.

The computing system can include clients, e.g., user computing device 712 and servers, e.g., server computing device 715. A client and server can be remote from each other and interact through a communication network. The relationship of client and server arises by virtue of the computer programs running on the respective computers and having a client-server relationship to each other. For example, a server can transmit data, e.g., an HTML page, to a client device, e.g., for purposes of displaying data to and receiving user input from a user interacting with the client device. Data generated at the client device, e.g., a result of the user interaction, can be received at the server from the client device.

The server computing device 715 can include one or more processors 713 and memory 714. The memory 714 can store information accessible by the processor(s) 713, including instructions 721 that can be executed by the processor(s) 713. The memory 714 can also include data 723 that can be retrieved, manipulated, or stored by the processor(s) 713. The memory 714 can be a type of non-transitory computer readable medium capable of storing information accessible by the processor(s) 713, such as volatile and non-volatile memory. The processor(s) 713 can include one or more central processing units (CPUs), graphic processing units (GPUs), field-programmable gate arrays (FPGAs), and/or application-specific integrated circuits (ASICs), such as tensor processing units (TPUs).

The instructions 721 can include one or more instructions that when executed by the processor(s) 713, causes the one or more processors to perform actions defined by the instructions. The instructions 721 can be stored in object code format for direct processing by the processor(s) 713, or in other formats including interpretable scripts or collections of independent source code modules that are interpreted on demand or compiled in advance. The instructions 721 can include instructions for implementing the system 100 consistent with aspects of this disclosure. The system 100 can be executed using the processor(s) 713, and/or using other processors remotely located from the server computing device 715.

The data 723 can be retrieved, stored, or modified by the processor(s) 713 in accordance with the instructions 721. The data 723 can be stored in computer registers, in a relational or non-relational database as a table having a plurality of different fields and records, or as JSON, YAML, proto, or XML documents. The data 723 can also be formatted in a computer-readable format such as, but not limited to, binary values, ASCII, or Unicode. Moreover, the data 723 can include information sufficient to identify relevant information, such as numbers, descriptive text, proprietary codes, pointers, references to data stored in other memories, including other network locations, or information that is used by a function to calculate relevant data.

The user computing device 712 can also be configured similarly to the server computing device 715, with one or more processors 716, memory 717, instructions 718, and data 719. For example, the user computing device 712 can be a mobile device, a laptop, a desktop computer, a game console, etc. The user computing device 712 can also include a user output 726, and a user input 724. The user input 724 can include any appropriate mechanism or technique for receiving input from a user, including acoustic input; visual input; tactile input, including touch motion or gestures, or kinetic motion or gestures or orientation motion or gestures; auditory input, speech input, etc., Example devices for user input 724 can include a keyboard, mouse or other point device, mechanical actuators, soft actuators, touchscreens, microphones, and sensors.

The server computing device 715 can be configured to transmit data to the user computing device 712, and the user computing device 712 can be configured to display at least a portion of the received data on a display implemented as part of the user output 726. The user output 726 can also be used for displaying an interface between the user computing device 712 and the server computing device 715. The user output 726 can alternatively or additionally include one or more speakers, transducers or other audio outputs, a haptic interface or other tactile feedback that provides non-visual and non-audible information to the platform user of the user computing device 712.

Although FIG. 7 illustrates the processors 713, 716 and the memories 714, 717 as being within the computing devices 715, 712, components described in this specification, including the processors 713, 716 and the memories 714, 717 can include multiple processors and memories that can operate in different physical locations and not within the same computing device. For example, some of the instructions 721, 718 and the data 723, 719 can be stored on a removable SD card and others within a read-only computer chip. Some or all of the instructions and data can be stored in a location physically remote from, yet still accessible by, the processors 713, 716. Similarly, the processors 713, 716 can include a collection of processors that can perform concurrent and/or sequential operation. The computing devices 715, 712 can each include one or more internal clocks providing timing information, which can be used for time measurement for operations and programs run by the computing devices 715, 712.

The server computing device 715 can be configured to receive requests to process data from the user computing device 712. For example, the environment 700 can be part of a computing platform configured to provide a variety of services to users, through various user interfaces and/or APIs exposing the platform services. One or more services can be a machine learning framework or a set of tools for training or executing generative models or other machine learning models according to a specified task and training data.

The devices 712, 715 can be capable of direct and indirect communication over the network 760. The devices 715, 712 can set up listening sockets that may accept an initiating connection for sending and receiving information. The network 760 itself can include various configurations and protocols including the Internet, World Wide Web, intranets, virtual private networks, wide area networks, local networks, and private networks using communication protocols proprietary to one or more companies. The network 760 can support a variety of short- and long-range connections. The short- and long-range connections may be made over different bandwidths, such as 2.402 GHz to 2.480 GHz (commonly associated with the Bluetooth^{®} standard), 2.4 GHz and 5 GHz (commonly associated with the Wi-Fi^{®} communication protocol); or with a variety of communication standards, such as the LTE^{®} standard for wireless broadband communication. The network 760, in addition or alternatively, can also support wired connections between the devices 712, 715, including over various types of Ethernet connection.

Although a single server computing device 715, user computing device 712, and datacenter 620 are shown in FIG. 7, it is understood that the aspects of the disclosure can be implemented according to a variety of different configurations and quantities of computing devices, including in paradigms for sequential or parallel processing, or over a distributed network of multiple devices. In some implementations, aspects of the disclosure can be performed on a single device, and any combination thereof.

Aspects of this disclosure can be implemented in digital electronic circuitry, in tangibly-embodied computer software or firmware, and/or in computer hardware, such as the structure disclosed herein, their structural equivalents, or combinations thereof. Aspects of this disclosure can further be implemented as one or more computer programs, such as one or more engines or modules of computer program instructions encoded on one or more tangible non-transitory computer storage media for execution by, or to control the operation of, one or more data processing apparatus.

A computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, that is generated to encode information for transmission to suitable receiver apparatus for execution by a data processing apparatus. A computer program may, but need not, correspond to a file in a file system. A computer program can be stored in a portion of a file that holds other programs or data, e.g., one or more scripts, in a single file, or in multiple coordinated files, e.g., files that store one or more engines, modules, sub-programs, or portions of code.

The term "configured" is used herein in connection with systems and computer program components. For a system of one or more computers to be configured to perform particular operations or actions means that the system has installed software, firmware, hardware, or a combination thereof that cause the system to perform the operations or actions. For one or more computer programs to be configured to perform operations or actions means that the one or more programs include instructions that, when executed by one or more data processing apparatus, cause the apparatus to perform the operations or actions.

The term "data processing apparatus" refers to data processing hardware and encompasses various apparatus, devices, and machines for processing data, including programmable processors, a computer, or combinations thereof. The data processing apparatus can include special purpose logic circuitry, such as a field programmable gate array (FPGA) or an application specific integrated circuit (ASIC), such as a Tensor Processing Unit (TPU). The data processing apparatus can include code that creates an execution environment for computer programs, such as code that constitutes processor firmware, a protocol stack, a database management system, an operating system, or combinations thereof.

The data processing apparatus can include special-purpose hardware accelerator units for implementing machine learning models to process common and compute-intensive parts of machine learning training or production, such as inference or workloads. Machine learning models can be implemented and deployed using one or more machine learning frameworks, such as static or dynamic computational graph frameworks.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a standalone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "database" refers to any collection of data. The data can be unstructured or structured in any manner. The data can be stored on one or more storage devices in one or more locations. For example, an index database can include multiple collections of data, each of which may be organized and accessed differently. The term "engine" can refer to a software-based system, subsystem, or process that is programmed to perform one or more specific functions. The engine can be implemented as one or more software modules or components or can be installed on one or more computers in one or more locations. A particular engine can have one or more processors or computing devices dedicated thereto, or multiple engines can be installed and running on the same processor or computing device. In some examples, an engine can be implemented as a specially configured circuit, while in other examples, an engine can be implemented in a combination of software and hardware.

The processes and logic flows described herein can be performed by one or more computers executing one or more computer programs to perform functions by operating on input data and generating output data. The processes and logic flows can also be performed by special purpose logic circuitry, or by a combination of special purpose logic circuitry and one or more computers. While operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all examples, and it should be understood that the described program components and systems can be integrated together in one or more software or hardware-based devices or computer-readable media.

A computer or special purpose logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, desktop computer, a personal digital assistant (PDA), a mobile audio or video player, a game console, a tablet, a virtual-reality (VR) or augmented-reality (AR) device, a Global Positioning System (GPS), or a portable storage device, e.g., a universal serial bus (USB) flash drive, as examples. Examples of the computer or special purpose logic circuitry can include the user computing device 712, the server computing device 715, or the hardware accelerators 777.

Computer readable media suitable for storing the one or more computer programs can include any form of volatile or non-volatile memory, media, computer program products, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible examples. Further, the same reference numbers in different drawings can identify the same or similar elements.

## Claims

1. A system, comprising:
a plurality of physical processing cores across one or more processing devices, the plurality of physical processing cores including one or more prefill processing cores configured to accelerate prefill operations and one or more decode processing cores configured to accelerate decode operations, wherein the one or more processing devices are configured to:
receive a query to execute an AI workload including prefill operations and decode operations;
determine, based on the request, a logical allocation of the one or more prefill processing cores for performing the prefill operations of the AI workload and of the one or more decode processing cores for performing the decode operations of the AI workload;
generate, based on the logical allocation, a mapping from the one or more processing devices to the logically allocated one or more prefill processing cores and the logically allocated one or more decode processing cores; and
execute, based on the mapping, the prefill operations and the decode operations of the AI workload.

2. The system of claim 1, wherein, in executing prefill operations and the decode operations of the AI workload, the one or more processing devices are configured to:
receive a workload input;
perform, by at least one prefill processing core of the mapped one or more prefill processing cores, the prefill operations of the AI workload to generate first output data;
perform, by the at least one decode processing core of the mapped one or more decode processing cores, the decode operations of the AI workload to generate second output data; and
generate a workload output based on at least the first output data and the second output data.

3. The system of claim 2, wherein:
the one or more processing devices comprise:
a first processing device including a first prefill processing core and a first decode processing core, and
a second processing device including a second prefill processing core and a second decode processing core,
the first processing device being mapped to both a logically allocated prefill processing core and a logically allocated decode processing core, and
the second processing device being mapped to:
both a logically allocated prefill processing core and a logically allocated decode processing core, or
one of a logically allocated prefill processing core and a logically allocated decode processing core.

4. The system of claim 3, wherein:
the second prefill processing core and the second decode processing core of the second processing device share one or both of memory bandwidth or memory capacity, and
the second processing device is configured to allocate one or more of the shared memory bandwidth or the memory capacity between the second prefill processing core and the second decode processing core, based on the mapping of the second processing device.

5. The system of claim 3, wherein:
the second prefill processing core and the second decode processing core of the second processing device share inter-chip interconnection bandwidth with one or more other components connected to the second processing device, and
the second processing device is configured to allocate the shared inter-chip interconnection bandwidth between the second prefill processing core and the second decode processing core, based on the mapping of the second processing device.

6. The system of claim 3, wherein:
the second prefill processing core and the second decode processing core of the second processing device operate on separate voltage domains, and
the second processing device is configured to allocate voltage between the second prefill processing core and the second decode processing core, based on the mapping of the second processing device.

7. The system of any one of claims 2 to 6, wherein:
the AI workload comprises executing one or more AI models;
the workload input represents one or more input tokens;
in generating the first output data, the one or more processing devices are configured to process the workload input to generate data representing a first output token using the logically allocated one or more prefill processing cores; and
in generating the second output data, the one or more processing devices are configured to process the first output data to generate one or more second output tokens using the logically allocated one or more decode processing cores; and/or
wherein, in determining the logical allocation, the one or more processing devices are configured to:
receive AI workload data including one or more characteristics of the AI workload and one or more workload execution objectives; and
determine the logical allocation in accordance with AI workload data and the one or more workload execution objectives.

8. The system of claim 7, wherein:
the one or more characteristics comprise one or more of a length of the workload input or a length of the workload output, and
the workload execution objectives comprise one or more of a target number of inputs per second, a threshold total cost of ownership for the one or more processing devices, a service-level objective, or a maximum latency between receiving the workload input and providing the workload output.

9. The system of any one of claims 1 to 8, wherein a first decode processing core of the one or more decode processing core comprises a large language model decoder engine including a systolic array of processing elements; and
wherein optionally the first decode processing core is further configured to accelerate sparse matrix operations; and
wherein further optionally a first computing device comprises the first decode processing core and a first prefill processing core configured to accelerate dense matrix operations.

10. A method, comprising:
receiving, by one or more processing devices, a query to execute an AI workload including prefill operations and decode operations, the one or more processing devices including a plurality of physical processing cores including one or more prefill processing cores configured to accelerate prefill operations and one or more decode processing cores configured to accelerate decode operations;
determining, by the one or more processing devices and based on the query, a logical allocation of the one or more prefill processing cores for performing the prefill operations of the AI workload and of the one or more decode processing cores for performing the decode operations of the AI workload;
generating, by the one or more processing devices and based on the logical allocation, a mapping from the one or more processing devices to the logically allocated one or more prefill processing cores and the logically allocated one or more decode processing cores; and
executing, by the one or more processing devices and based on the mapping, the prefill operations and the decode operations of the AI workload.

11. The method of claim 10, wherein executing prefill operations and the decode operations of the AI workload comprises:
receiving, by the one or more processing devices, a workload input;
performing, by at least one prefill processing core of mapped one or more prefill processing cores, the prefill operations of the AI workload to generate first output data;
performing, by the at least one decode processing core of the mapped one or more decode processing cores, the decode operations of the AI workload to generate second output data; and
generating, by the one or more processing devices, a workload output based on at least the first output data and the second output data.

12. The method of claim 11, wherein:
the one or more processing devices comprises
a first processing device including a first prefill processing core and a first decode processing core, and
a second processing device including a second prefill processing core and a second decode processing core,
the first processing device being mapped to both a logically allocated prefill processing core and a logically allocated decode processing core, and
the second processing device being mapped to
both a logically allocated prefill processing core and a logically allocated decode processing core, or
one of a logically allocated prefill processing core and a logically allocated decode processing core.

13. The method of claim 12, wherein:
the AI workload comprises executing one or more AI models;
the workload input represents one or more input tokens;
generating the first output data comprises processing, by the logically allocated one or more prefill processing cores, the workload input to generate data representing a first output token; and
generating the second output data comprises processing, by logically allocated one or more decode processing cores, the first output data to generate one or more second output tokens.

14. The method of claim 12 or claim 13, wherein determining the logical allocation comprises:
receiving, by the one or more processing devices, AI workload data including one or more characteristics of the AI workload and one or more workload execution objectives; and
determining, by the one or more processing devices, the logical allocation in accordance with AI workload data and the one or more workload execution objectives; and/or
wherein optionally:
the one or more characteristics comprise one or more of a length of workload input or a length of the workload output, and
the workload execution objectives comprise one or more of a target number of inputs per second, a threshold total cost of ownership for the one or more processing devices, a service-level objective, or a maximum latency between receiving the workload input and providing the workload output.

15. One or more non-transitory computer-readable storage media storing instructions that when executed by one or more processing devices including a plurality of physical processing cores including one or more prefill processing cores configured to accelerate prefill operations and one or more decode processing cores configured to accelerate decode operations, causes the one or more processing devices to perform the method according to any one of claims 10 to 14.
